# EUROPEAN PATENT SPECIFICATION

(11) **EP 4 341 156 B1**
(45) Date of publication and mention of the grant of the patent: **27.08.2025**
(21) Application number: 22726795.2
(22) Date of filing: 19.05.2022
(51) Int. Cl.: B63H 7/02

(54) **IMPROVEMENTS IN OR RELATING TO A DEVICE FOR USE ON WATER**
VERBESSERUNGEN AN ODER IM ZUSAMMENHANG MIT EINER VORRICHTUNG ZUR VERWENDUNG AUF WASSER
PERFECTIONNEMENTS APPORTÉS OU SE RAPPORTANT À UN DISPOSITIF À UTILISER SUR L'EAU

(30) Priority: 19.05.2021 GB 202107166
(43) Date of publication of application: 27.03.2024
(73) Proprietor: Railscape Technologies Limited, Rayleigh, Essex SS6 7UY (GB)
(72) Inventor: REGLAR, Daniel F J, Rayleigh Essex SS6 7UY (GB)
(74) Representative: Stratagem IPM Limited
(86) International application number: PCT/GB2022/051258
(87) International publication number: WO 2022/243684

(56) References cited:
- WO-A1-2018/197749
- KR-A- 20170 061 865
- US-A- 1 842 125
- US-A1- 2016 114 887

## Description

### FIELD OF THE INVENTION

The present invention relates to a remotely controlled boat-drone hybrid for use on water rand through the air.

Structures within the vicinity of a body of water are often subject to increased degradation due to the moist environment. In addition, vegetation that has gained a foothold in the fabric of a structure is extremely detrimental to the integrity of the same. The seeds that allow the spread of this kind of problem vegetation are carried on the wind or by birds and therefore ingress sites are often in very hard to reach places. The ingress of the plant is destructive in itself. However, voids created by the growth of vegetation also allow water into the fabric of the structure. This, in turn, allows freeze-thaw action to occur which causes further damage over time.

These problems are often exacerbated within a waterway environment by the limitations associated with personnel access to the water, which often means exposing personnel to risk. Consequently, a remotely controlled vehicle is often used to access a location within a body of water that is undesirable or inaccessible for a human to access. However, the use of a remotely controlled vehicle still requires access to the body water in order for the vehicle to be launched and retrieved. Steep banks and/or overgrown vegetation, for example, may limit access to the water. This may prevent inspection and/or repair work from being conducted. This practice is therefore heavily reliant on personnel accessibility to the body water.

Moreover, obstacles within a body of water can cause damage to the vehicle's propulsions system. This provides further limitations for the use of traditional remotely controlled vehicles within a body of water.

Document US 2016/114887 A1 shows an amphibious vertical takeoff and landing unmanned vehicle for use through the air and underwater, in other words a submarine-drone hybrid. The vehicle comprises a modular and expandable waterproof body, a propulsion system including a plurality of propellers, and motors arranged on respective tilting arms.

It is against this background that the present invention has arisen.

### SUMMARY OF THE INVENTION

According to the present invention, there is provided a remotely controlled boat-drone hybrid for use on water and through the air, the boat-drone hybrid comprising: a buoyant hull having a substantially planar base; and a propulsion system configured to propel the boat-drone hybrid in any direction across a plane substantially parallel to the base, wherein the propulsion system is located above the water, in use.

A boat-drone hybrid (hereinafter referred to as device) comprising a propulsion system located above the water, in use, allows the device to navigate through shallow waters without risk of the propulsion system being damaged by objects within the water. Moreover, the propulsion system's ability to propel the device in any direction across a surface of a body of water significantly increases the manoeuvrability of the device, in use. This enables the device to navigate around obstacles more easily and enables the device to recover from a situation in which it has run aground by simply reversing the direction of propulsion.

The propulsion system may be located within the hull. Alternatively, or in addition, the propulsion system may be located above the hull and/or may overhang the edges of the hull.

Furthermore, a hull with a substantially planar base enables the device to travel in any direction across a plane parallel to its base with minimal drag and maximum stability. Moreover, the planar base enables the device to be used in shallow water in addition to reducing the risk of the device being grounded. For example, the base may be substantially flat. Consequently, the device may be a flat-bottomed boat.

The base may comprise at least two axes of symmetry. Alternatively, or in addition, the base may be substantially circular.

The profile of the base may be optimised in order to reduce the drag and/or increase the stability of the device, in use. Consequently, a base with at least two axes of symmetry enables the device to travel along a path parallel to either of the axes with minimal drag and maximum stability. This improves the manoeuvrability of the device. Alternatively, or in addition, the hull may comprise at least two axes of symmetry. For example, the hull may be substantially circular. A substantially circular hull and/or base enables the device to travel in any direction with minimal drag and maximum stability. Alternatively, the hull and/or base may be substantially oval.

The shape of the hull and/or base may be optimised in order to maximise the buoyancy of a device required to meet certain size requirements. For example, an oval hull and/or base may be elongated to maximise the buoyancy of a device required to pass through a narrow channel of a given width. This may enable more weight to be carried compared to a device having a circular hull and/or base and limited by the same width requirements.

Alternatively, the hull and/or base may be any regular or irregular polygonal shape, including, but not limited to, a triangular, square, or hexagonal. Consequently, the hull and/or base may comprise a plurality of sides. Any number of sides may be used.

The hull may be configured to carry a payload.

Consequently, in use, the device may reach a desired location and use the payload to carry out a task that previously would have required human interaction. This eliminates the need for a human to work within a body of water, confined space, hazardous or dangerous location, and/or in a location difficult to access.

The payload may comprise a treatment device. The treatment device may be a clipper. Alternatively, the treatment device may be a sprayer or controlled droplet actuator (CDA). Furthermore, the treatment device may be an applicator.

The addition of a clipper enables the device to cut a target such as a plant, weed, tree, or a root thereof. Plants, weeds, and trees can be detrimental to a structure, such as a bridge, and the removal of such targets is important in the upkeep of the structure. Moreover, the addition of a sprayer enables the device to spray a target, such as a plant or weed. For example, the target may be sprayed with herbicide. The herbicide may be in the form of a liquid, emulsion of suspended solid particles or gel. The act of applying herbicide or pesticide can assist in the killing of a living target, such as a weed. Furthermore, the addition of an applicator enables the device to apply a substance, such as a sealant, grout, or foam onto or into a surface. The applicator may be used in order to fill a void or repair a crack, for example.

In some embodiments, the hull comprises a rotatable disc. Alternatively, or in addition, the hull may comprise a rotatable track. The rotatable track may run around the outside edge of the hull. The rotatable disc and/or track may be configured to temporarily receive the payload. For example, in use, the payload may be placed into contact with the rotatable disc and/or track and evenly distribute away from the device.

Furthermore, the payload may comprise an inspection device. The inspection device may provide real-time feedback to an operator and/or a remote display. The inspection device is advantageous as it enables the device to precisely and clearly view a location or target of interest. In addition, the inspection device may provide real-time feedback, which may be analysed and/or reviewed in real-time. This enables an operator and/or a computer system to analyse the device's position and, as a result, select an appropriate action in real-time. Moreover, the inspection device may record data relating to a location or target of interest. The data may be reviewed at a later date.

In some embodiments, the inspection device may comprise a camera. The camera may be a 360-degree camera. Furthermore, in some embodiments, the inspection device may comprise a radar, LIDAR or SONAR sensor.

A camera allows the operator and/or device to see the surface to be traversed and/or the location to be reached. A camera may also enable the device to be operated when it is out of the line of sight of an operator. The camera may be a digital camera, ultraviolet (UV) camera, or Infrared (IR). A radar sensor allows the operator and/or device to see into the wall, enabling rebar and/or voids to be observed thereby improving the functionality and versatility of the device.

The hull may comprise a bumper. The bumper may surround the entire hull. Alternatively, or in addition, the bumper may extend around the entire perimeter of the hull. Moreover, the bumper may extend above the height of the water, in use. Consequently, the bumper may be a gunwale. The bumper may be configured to protect the main body of the hull from damage during a collision. Alternatively, or in addition, the bumper may be configured to minimise the risk of water flowing over the edge of the hull, in use.

The bumper may comprise a flexible tip. The flexible tip may extend around the entire perimeter of the bumper. The flexible tip may extend above the bumper, in use. Accordingly, the flexible tip may be configured to further minimise the risk of water flowing over the edge of the hull, in use. Moreover, the flexible tip may be deformed by the propulsive force generated by the propulsion system, in use. Allowing the flexible tip to deform, in use, ensures that the tip does not generate a solid barrier that may reduce the efficiency of the propulsion system.

The propulsion system may be rotatable with respect to the hull.

Rotating the propulsion system with respect to the hull enables the propulsion system to provide propulsion in any direction, thus increasing the manoeuvrability of the device. More specifically, the entire propulsion system may be rotatable with respect to the hull.

The propulsion system may be configured to rotate at least 360 degrees about an axis substantially perpendicular to the base of the hull.

More specifically, the propulsion system may be configured to rotate at least 360 degrees in either direction (i.e. clockwise and/or anti-clockwise) about an axis substantially perpendicular to the base of the hull. Consequently, the propulsion system may be configured to rotate clockwise and/or anti-clockwise about an axis substantially perpendicular to the base of the hull. Alternatively, in some embodiments, the propulsion system may be configured to rotate at least 360 degrees in either direction (i.e. clockwise and/or anti-clockwise) about an axis orientated between 60 and 120 degrees with respect to the plane of the base of the hull.

Alternatively, or in addition, the propulsion system may be configured to rotate at least 10, 20, 40, 60, 90, 120, 150, 180, 220, 270, 310, or 360 degrees in either direction about an axis substantially perpendicular to the base of the hull.

The propulsion system may be located on a rotatable platform. The rotatable platform may be configured to rotate at least 360 degrees about an axis substantially perpendicular to the base. Alternatively, the rotatable platform may be configured to rotate at least 360 degrees in any direction about an axis orientated between 60 and 120 degrees with respect to the plane of the base of the hull.

The hull may comprise a continuous rotation bearing configured to receive the rotatable platform. The hull may further comprise a motor configured to rotate the platform around the rotation bearing. The platform may comprise a cable operably connected to the motor and configured to transmit power there between. Alternatively, the platform may be operably connected to the motor via at least one slip ring. The use of a slip ring may allow for continuous rotation of the platform with respect to the hull.

Alternatively, or in addition, the propulsion system may comprise a joint configured to provide at least 360 degrees of rotation. The joint may be a universal joint.

The hull may comprise a continuous track having a camera. The camera may be configured to move around the track, in use.

A continuous track having a camera configured to move around the track, in use, enables the camera, and therefore the operator, to always see the direction of travel, for example. The track may be substantially circular.

The propulsion system may comprise a turbomachine.

The turbomachine may be a fan, compressor, or blower. More specifically, the turbomachine may be a ducted fan. Most specifically, the turbomachine may be an electric ducted fan (EDF). The duct may control and/or direct the thrust generated by the fan in order to enable the device to operate more efficiently. Further, the use of a ducted fan increases the efficiency with which thrust is generated and therefore the fan requires less power per unit time compared to a conventional fan or propeller. This enables the device to operate for longer periods of time given a set amount of power.

Alternatively, or in addition, the propulsion system may comprise any suitable means for moving air in order to generate thrust. For example, the propulsion system may comprise a propeller and/or a propulsor. Alternatively, or in addition, the propulsion system may comprise a jet. The use of a jet may provide a greater power to weight ratio than a fan, compressor, or blower.

The propulsion system may comprise a plurality of turbomachines.

A plurality of turbomachines provides redundancy to the system. A plurality of turbomachines also enables the device the change direction more quickly by adjusting the power supplied to each turbomachine. The plurality of turbomachines may comprise a pair of turbomachines. For example, the plurality of turbomachines may comprise two opposing turbomachines, wherein a first turbomachine may be configured to generate propulsion in a first direction and a second turbomachine may be configured to generate propulsion in a second direction. The second direction may be different to the first direction. The second direction may be opposite to the first direction. Accordingly, in the context of 'opposing turbomachines', the word 'opposing' means that the propulsive force generated by each 'opposing' turbomachine is in substantially the opposite direction to the other turbomachine. The plurality of turbomachines may be mounted on the rotatable platform. Alternatively, or in addition, the plurality of turbomachines may be mounted on the hull.

The propulsion system may comprise at least three turbomachines.

At least three turbomachines may be used to ensure that the device can generate propulsion in any direction across the plane substantially parallel to the device. For example, a first turbomachine may be configured to generate propulsion in a first direction; a second turbomachine may be configured to generate propulsion in a second direction and a third turbomachine may be configured to generate propulsion in a third direction. The first, second and third directions may be different. More specifically, the first direction may be different from the second and third direction and the second direction may be different from the first and third direction.

In some embodiments, the plurality of turbomachines may be equally spaced apart. More specifically, the plurality of turbomachines may be equally spaced apart around the hull. For example, each of the first, second and third directions may be offset by 120° relative to the other directions. For example, a plurality of turbomachines may be arranged in a shape that mirrors the shape of the hull and/or base. Consequently, when each of the turbomachines produces a propulsive force of equal magnitude, there may be a zero net force on the device.

The propulsions system may comprise two or more pairs of opposing turbomachines.

Two or more pairs of turbomachines ensure that the propulsive force generated by each turbomachine can have an equal and opposite propulsive force generated by the opposing turbomachine. This ensures that there is substantially zero net force on the device when each turbomachine within the pair produces a propulsive force of a given magnitude. Consequently, adjusting the magnitude of the propulsive force of each turbomachine can provide extremely accurate and precise manoeuvrability. Moreover, a plurality of opposing turbomachine may be used to more precisely maintain the location of the device. This may increase stability, in use.

Moreover, the device may comprise a receiver configured to determine the location of the device. The receiver may be a GPS receiver. The receiver may be connected to a processor. The processor may be configured to control the propulsion system. For example, the processor may be configured to automatically adjust the propulsive force generated by the propulsion system based on the position and/or heading of the device. Consequently, in use, the propulsion system may be used to maintain the position and/or heading of the device. This may be used to counteract external forces, such as wind and/or the flow of water.

The magnitude of the propulsive force generated by each turbomachine may be varied, in use, in order to steer the device.

This may significantly increase the manoeuvrability of the device. For example, each turbomachine may be configured to initially generate a propulsive force of an equal magnitude. Consequently, the device will remain stationary. However, by increasing or decreasing the magnitude of the propulsive force generated by at least one turbomachine, the device may be given a net propulsive force in a given direction, thus causing the device to move in that direction.

Each turbomachine may be positioned at an angle relative to the base of the hull such that the line of action of the propulsive force generated by the turbomachine is at an angle relative to a plane parallel and/or perpendicular to the base of the hull. The angle may be referred to as a cant angle. The cant angle may be fixed. Alternatively, the cant angle may be adjustable. For example, the cant angle may be adjusted via a processor and/or a remote control. The cant angle may tilt the direction of the propulsive force generated by each turbomachine. The cant angle may be measured with respect to a plane substantially parallel to the base. As such, the cant may result in the propulsive force generated by each turbomachine having a horizontal component and a vertical component. For example, a cant angle of 45° with respect to a plane substantially parallel to the base will produce a propulsive force having a horizontal component and a vertical component of equal magnitude. The cant angle with respect to a plane substantially parallel to the base may be up to 1, 2, 3, 5, 10, 15, 20, 30, or 45 degrees.

Alternatively, or in addition, the cant angle may be measured with respect to a plane substantially perpendicular to the base. As such, the cant may result in the propulsive force generated by each turbomachine having two perpendicular horizontal components that are each parallel to the plane of the base. For example, a cant angle of 45° with respect to a plane substantially perpendicular to the base will produce a propulsive force having two perpendicular horizontal components of equal magnitude. The cant angle with respect to a plane substantially perpendicular to the base may be up to 1, 2, 3, 5, 10, 15, 20, 30, or 45 degrees. A cant angle measured with respect to a plane substantially perpendicular to the base may be used to enable the device to spin on an axis substantially perpendicular to the base. In other words, the cant angle may provide yaw.

Each turbomachine may be attached to a corresponding pylon having a corresponding hinge. Each turbomachine may be configured to rotate about its hinge.

For example, the device may comprise a hull having a substantially planar base; and a propulsion system comprising a plurality of turbomachines configured to propel the device in any direction across a plane substantially parallel to the base, wherein the propulsion system is located above the water, in use, wherein each turbomachine is attached to a corresponding pylon having a corresponding hinge, and wherein each turbomachine is configured to rotate about its hinge.

For example, the device may comprise a plurality of pylons, wherein each pylon comprises at least one hinge and supports at least one turbomachine. Enabling each turbomachine to rotate about a hinge further improves the manoeuvrability of the device. In some embodiments, each pylon may be configured to rotate about its hinge. This, in turn, may cause the turbomachine to also rotate about the hinge.

Alternatively, or in addition, each turbomachine and/or pylon may be configured to rotate around the hinge. The hinge may be a rotation joint. Consequently, each turbomachine and/or pylon may be configured to rotate around a rotation joint.

In this context, rotation of the pylon and/or turbomachine 'around' a hinge, such as a rotation joint, means that the pylon and/or turbomachine rotates around a linear axis. For example, a wheel rotates around an axle. Conversely, rotation of pylon and/or turbomachine 'about' a hinge means that the pylon and/or turbomachine rotates relative to a central point of the hinge. For example, a barrier rotates about a hinge in order to be raised and/or lowered.

More specifically, each turbomachine may comprise a nacelle configured to house the turbomachine. In this context, a nacelle is a streamlined casing on the outside of the turbomachine. The nacelle is configured to increase the thrust generated by the turbomachine. The nacelle may be connected to the pylon. The nacelle may be connected to the pylon via a hinge. The pylon may be connected to the hull. The pylon may be connected to the hull via a hinge.

Alternatively, or in addition, each turbomachine may comprise a thrust tube. The thrust tube may be used to control the surface area of the air being propelled out the back of the turbomachine. For example, the thrust tube may comprise a proximal end for attachment to the turbomachine and a distal end comprising an exhaust exit. The distal end may have a smaller cross sectional area than the proximal end. The cross sectional area of the proximal end may be substantially the same size as the cross sectional area of the turbomachine. By decreasing the exhaust exit diameter of the turbomachine, the velocity of the air being propelled out the back of the turbomachine will increase, thus increasing the propulsive force generated by the turbomachine.

In some embodiments, the thrust tube may further comprise an expansion zone. The expansion zone may comprise a cross sectional area that is larger than the cross section area of the turbomachine. The expansion zone may be located between the proximal end and the distal end of the thrust tube. This may cause the air being expelled from the turbomachine to first expand, before being compacted into a smaller diameter of tube. This may further increase the propulsive force generated by the turbomachine.

The turbomachine may be connected to the pylon via a rotation joint. For example, the nacelle may be connected to the pylon via a rotation joint. Alternatively, the turbomachine may be connected to the hull via a rotation joint. The rotation joint may be configured to provide a cant angle. The rotation joint may be controllable via a processor. The processor may be operably connected to a remote control.

Each pylon may comprise a plurality of hinges. For example, each pylon may be attached to the hull via a base hinge and attached to the turbomachine via a connection hinge. Each hinge may have a single axis of rotation. Alternatively, each hinge may comprise multiple axes of rotation.

Each pylon may be elongate in a first direction. The first direction may be substantially perpendicular to the base of the hull. Each pylon may be connected to the hull via a hinge. Connecting the pylon to the hull via a hinge provides the greatest movement of the turbomachine when the pylon is rotated about the centre of rotation of the hinge. Consequently, when the pylon is rotated 90 degrees away from an initially vertical position, the turbomachine is positioned at the maximum possible distance away from the hull of the device. This results in a more stable device when propulsion is being generated in a substantially vertical direction.

In some embodiments, each pylon comprises a hinged connection and an actuator. The hinged connection may comprise a base portion connected to the hull and a rotatable portion connected to the turbomachine. The rotatable portion may be connected to the base portion via a hinge. The actuator may be connected to the rotatable portion. The actuator may be configured to pivot the rotatable portion about the hinge. The actuator may be a linear actuator. For example, the actuator may be an electrical worm drive. Alternatively, the actuator may be a hydraulic arm. The actuator may comprise a housing. The housing may be a protective casing, such as a tube.

Each hinge is configured to rotate the turbomachine up to 180 degrees about its centre of rotation. Consequently, the turbomachine is rotated between a substantially vertical and substantially horizontal axis. For example, this enables the turbomachine to propel the device in a substantially vertical direction (i.e. away from a body of water) and/or in a substantially horizontal direction (i.e. along the surface of a body of water), in use. Consequently, this enables the turbomachine to propel the device in two opposing directions.

Alternatively, each hinge may be configured to rotate the turbomachine up to 200 degrees, 190 degrees, 150 degrees, 120 degrees, 110 degrees, 100 degrees or up to 90 degrees about its centre of rotation.

Each pylon may be sized such that a propulsive force generated by the corresponding turbomachine substantially perpendicular to the plane substantially parallel to the base is located outside of the hull of the device.

Generating a propulsive force substantially perpendicular to the plane substantially parallel to the base of the device enables a net vertical force to be generated on the device. More specifically, this enables the device to leave the water, in use. Consequently, the device is a boat-drone hybrid.

Each turbomachine may comprise two axes of rotation relative to the hull.

A turbomachine comprising two axes of rotation relative to the hull may enable the turbomachine to be rotated about a hinge and around a hinge. This enables the turbomachine to produce thrust in any direction. More specifically, rotating the turbomachine around a hinge enables the direction of a propulsive force across a plane parallel to the base to be varied, whereas rotating the turbomachine about a hinge enables the magnitude of the vertical component of propulsive force to be varied. This enables the device to control its movement around a yaw axis.

Alternatively, or in addition, the pylon may comprise two axes of rotation. Again, this enables the turbomachine to produce thrust in any direction. The pylon may be connected to the hull via a hinge configured to rotate the pylon and corresponding turbomachine around and/or about its axis of rotation. Alternatively, or in addition, the turbomachine may be connected to the pylon via a hinge configured to rotate the turbomachine around and/or its axis of rotation. The hinge between the pylon and the turbomachine may be a rotation joint.

Accordingly, each pylon may be connected to the hull via a hinge having a single axis of rotation and each turbomachine may be connected to a pylon via a hinge having a single axis of rotation, wherein the axis of rotation between the turbomachine and the pylon is perpendicular to the axis of rotation between the pylon and the hull.

The propulsion system is configured to propel the device in any direction relative to the plane substantially parallel to the base.

More specifically, the propulsion system is configured to propel the device in any direction substantially parallel and/or perpendicular to the base. For example, each turbomachine is rotated, in use, such that the propulsive force generated by the turbomachine comprises a vertical component. The vertical component of the propulsive force is in an upward and/or downward direction. Upward and downward are determined relative to gravity, wherein downward is in the same direction as gravity and upward is the opposite direction to gravity.

More specifically, each turbomachine may be rotated, in use, such that the propulsive force generated by the turbomachine comprises a component of force substantially perpendicular to the plane of the base. Each turbomachine may be rotated via at least one hinge. This may be used to push the hull into the water, which may enable the device to navigate under low hanging objects, such as a tree branch or bridge, for example.

The device may be controlled via a remote control. The remote control may connect to a control unit located on the device. The control unit may be operably connected to each moveable component of the device.

Alternatively, or in addition, the device may be controlled via a central processing unit (CPU). The remote control may comprise the CPU. The CPU may be configured to auto-adjust the position and/or heading of the device using the GPS of the device.

More specifically, the CPU may comprise a flight controller. The flight controller may be configured to chart a course via flight control software. The flight controller may communicate with the GPS receiver. Consequently, the flight controller may cause the device to follow a predetermined course. For example, a predetermined course may be useful for building surveys, sonar surveys, search patterns, and/or for dosing a body of water with a payload such as herbicide, pesticide, and/or food for aquatic animals.

The device may be powered by a battery. Alternatively, or in addition, the device may be powered by a super capacitor and/or a fuel cell. The fuel cell may be a hydrogen fuel cell. In some embodiments, a fuel cell and battery are connected in series. The fuel cell and battery may be configured to power the device and/or propulsion system. Therefore, the device may be powered by a hybrid battery and fuel cell system. If the device requires less than 20% of the total power output of the device, the fuel cell may provide power to the propulsion system. In addition, the fuel cell may be configured to charge the battery. However, if the device requires more than 20% of the total power output of the device the battery may provide power to the propulsion system. However, the power output ratio between the fuel cell and the battery may vary. For example, the fuel cell may be configured to provide power to the propulsion system when less than 50%, 40%, 30%, 20%, 10% or 5% of the total power output of the device is required. Accordingly, the battery may be configured to provide power to the propulsion system when more than 50%, 60%, 70%, 80%, 90%, or 95% of the total power output of the device is required.

In some embodiments, a fuel cell, battery, and super capacitor are connected in series. The fuel cell, battery, and super capacitor may be configured to power the device and/or propulsion system. If the device requires less than 25% of the total power output of the device, the fuel cell may provide power to the propulsion system and charge the battery. In addition, the battery may be configured to charge the super capacitor. If the device requires between 25% and 75% of the total power output of the device the battery may provide power to the propulsion system. If the device requires more than 75% of the total power output of the device, the super capacitor may provide power to the propulsion system. Again, the power output ratio between the fuel cell, battery, and super capacitor may vary. For example, the fuel cell may be configured to provide power to the propulsion system when less than 50%, 40%, 30%, 20%, 10% or 5% of the total power output of the device is required. The battery may be configured to provide power to the propulsion system when between 50 and 75%, 40% and 80%, 30% and 85%, or 20% and 90% of the total power output of the device is required. The super capacitor may be configured to provide power to the propulsion system when more than 75%, 80%, 85%, 90%, or 95%, of the total power output of the device is required.

### FIGURES

Figure 1 shows the device according to some embodiments of the present invention comprising a rotatable propulsion system;
Figure 2 shows a hull having a substantially planar base;
Figure 3 shows a bearing configured to rotate the propulsion system shown in figure 1 within the hull;
Figure 4 shows the mechanism configured to rotate the propulsion system shown in figure 1;
Figure 5 shows a device according to some embodiments of the present invention comprising two pairs of opposing turbomachines;
Figure 6 shows the device of figure 5, wherein each turbomachine has been rotated about its corresponding hinge; and
Figure 7 shows the device of figures 5 and 6 comprising a turbomachine attached to the hull via a pylon.

### DETAILED DESCRIPTION

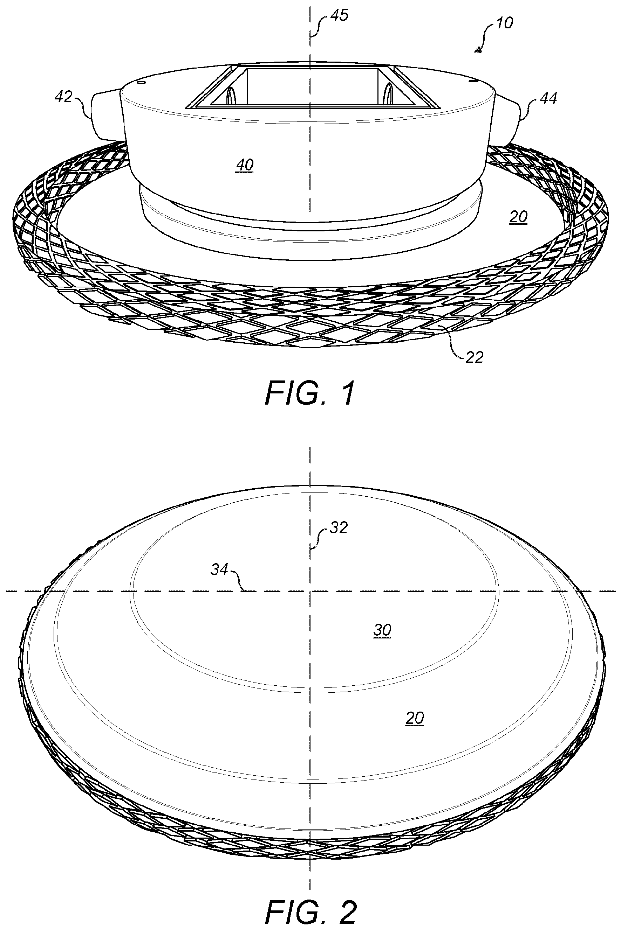

Figure 1 shows a device according to some embodiments of the present invention. More specifically, Figure 1 shows a device 10 for use on water. Consequently, the illustrated embodiment in figure 1 shows the device 10 as a boat.

The device 10 comprises a hull 20. The hull 20 is a watertight component configured to provide buoyancy, in use. The hull 20 comprises a substantially planar base 30, as shown in Figure 2. The base 30 comprises at least two axes of symmetry, as indicated by dashed lines 32, 34 in Figure 2. The first axis of symmetry 32 is substantially perpendicular to the second axis of symmetry 34. More specifically, the base 30 is substantially circular. However, in other embodiments that are not illustrated in the accompanying drawings, the base 30 may be a different shape.

The hull 20 is configured to carry a payload. As previously disclosed, the payload may comprise a treatment device and/or an inspection device. For example, the hull 20 may comprise a camera. The hull 20 further comprises a bumper 22. The bumper 22 is configured to protect the main body of the hull 20 from damage during a collision. The main body of the hull 20 is fabricated from carbon fibre. Although in other embodiments, not shown in the accompanying drawings, the hull 20 may be formed from other materials. The bumper 22 is formed from Ethylene-vinyl acetate (EVA). The EVA may be provided in the form of foam. The EVA provides a non-skid covering.

The device 10 further comprises a propulsion system 40 configured to propel the device 10. More specifically, the propulsion system 40 is configured to propel the device 10 in any direction across a plane substantially parallel to the base 30. In use, the propulsion system 40 is located above the water.

The propulsion system 40 is rotatable with respect to the hull 20. More specifically, the propulsion system 40 is configured to rotate at least 360 degrees about an axis 45 substantially perpendicular to the base 30 of the hull. Consequently, the propulsion system 40 can produce a propulsive force in any direction across a surface of a body of water, i.e. in any direction in a substantially horizontal plane when the boat 10 is in use on still water.

The propulsion system 40 comprises at least one turbomachine 42. More specifically, in the illustrated embodiment, the propulsion system 40 comprises a first turbomachine 42 and a second turbomachine 44. The first turbomachine 42 is an electric ducted fan (EDF). The second turbomachine 44 is an electric ducted fan (EDF). Consequently, the propulsion system comprises a plurality of turbomachines. More specifically, in some embodiments, the propulsion system comprises 2, 3, 4, 5, 6, 7, 8, 9, 10, 11, 12, or more than 12 turbomachines.

The first turbomachine 42 is configured to generate a propulsive force in a first direction. Alternatively, or in addition, the first turbomachine 42 is configured to propel the device in a first direction. The second turbomachine 44 is configured to generate a propulsive force in a second direction. Alternatively, or in addition, the second turbomachine 44 is configured to propel the device in a second direction. The first direction is the opposite direction to the second direction, within a substantially horizontal plane. Consequently, the first turbomachine 42 and second turbomachine 44 constitute a pair of opposing turbomachines. In some embodiments, not illustrated in the accompanying drawings, the turbomachine comprises two or more pairs of opposing turbomachines.

The first turbomachine 42 is a drive turbomachine and the second turbomachine 44 is a brake turbomachine. Consequently, the second turbomachine 44 may generate a propulsive force in the opposite direction to the direction of movement of the device. This may be used to slow down and/or stop the device. This increases the rate at which the device 10 can alter its speed and/or direction as the rotational movement required by the propulsion system 40 is reduced.

The propulsion system 40 is configured to generate a propulsive force comprising a horizontal and vertical component. Consequently, at least one of the turbomachines 42, 44 is mounted to enable it to be angled downward, such that the propulsive force generated, in use, comprises a vertical component. The vertical component of the propulsive force generated by the propulsion system prevents the device from being propelled below the water surface, in use. This phenomenon is known as 'diving'.

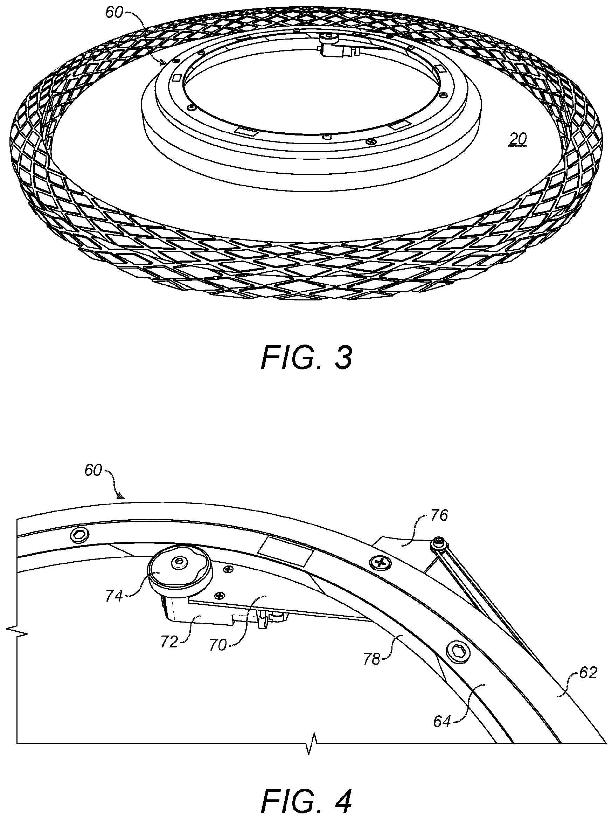

Figure 3 shows a bearing 60 configured to rotate the propulsion system 40 within the hull 20. More specifically, the bearing 60 comprises an outer ring 62 and an inner ring 64. The outer ring 62 is connected to the hull 20. The inner ring 64 is connected to the propulsion system 40. The inner ring 64 is configured to rotate relative to the outer ring 64, in use.

Figure 4 shows the driving mechanism 70 configured to rotate the propulsion system 40 relative to the hull 20. The driving mechanism 70 comprises a drive motor 72, drive wheel 74, and drive-tensioning lever 76. The drive motor 72 is configured to provide power to the drive wheel 74, thus causing it to rotate, in use. The drive wheel 74 is in contact with the inner ring 62. Rotation of the drive wheel 74 causes the inner ring 62 to rotate relative to the outer ring 64. Consequently, the propulsion system 40, which is connected to the inner ring 62, rotates relative to the hull 20, which is connected to the outer ring 64. The drive-tensioning lever 76 is configured to ensure that sufficient contact is maintained between the drive wheel 74 and the inner ring 64. This prevents the drive wheel 74 from slipping relative to the inner ring 62. Moreover, the inner surface 78 of the inner ring 62 comprises a textured surface. The textured surface is configured to prevent the drive wheel 74 from slipping. More specifically, the inner surface 78 of the inner ring 62 comprises grip tape.

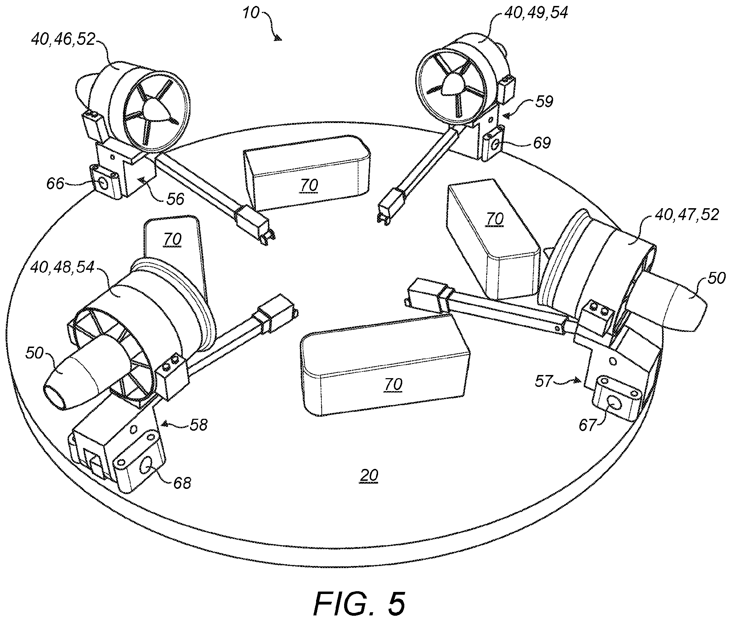

Figure 5 shows a device 10 according to the present invention comprising two pairs of opposing turbomachines. The device 10 comprises a hull 20 having a substantially planar base 30, as shown in Figure 2. The device 10 further comprises a propulsion system 40 configured to propel the device 10 in any direction across a plane substantially parallel to the base 30. The propulsion system 40 comprises four turbomachines 46, 47, 48, 49. More specifically, the propulsion system 40 comprises two pairs of opposing turbomachines 52, 54. Each turbomachine 46, 47, 48, 49 is an EDF. Each EDF comprise a motor located within a cowling 50. The cowling is configured to ensure a smooth airflow in generated by the EDF.

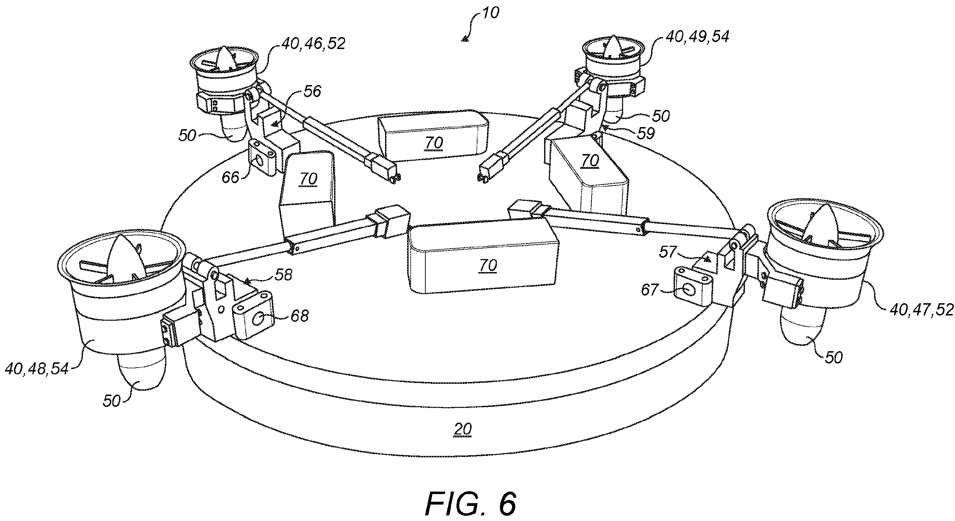

Each of the four turbomachines 46, 47, 48, 49 is attached to a corresponding pylon 56, 57, 58, 59. Each pylon 56, 57, 58, 59 comprises a hinge 66, 67, 68, 69. Each turbomachine 46, 47, 48, 49 is configured to rotate about its hinge 66, 67, 68, 69. Figure 6 shows the device of figure 5, wherein each turbomachine 46, 47, 48, 49 has been rotated about its corresponding hinge 66, 67, 68, 69. As shown in figure 6, each pylon 56, 57, 58, 59 is sized such that a propulsive force generated by the corresponding turbomachine 46, 47, 48, 49 substantially perpendicular to the plane substantially parallel to the base 30 of the hull 20 is located outside of the hull 20 of the device 10.

Moreover, each turbomachine 46, 47, 48, 49 is connected to a battery 70 configured to provide power thereto. The battery 70 is also configured to provide power to the pylon 56, 57, 58, 59 and, more specifically, the actuator 86 corresponding to each turbomachine 46, 47, 48, 49. However, in other embodiments, not illustrated in the accompanying figures, a different number of batteries may be used. For example, a single battery may be used to provide power to each turbomachine 46, 47, 48, 49. Alternatively, or in addition, other power sources may also be used.

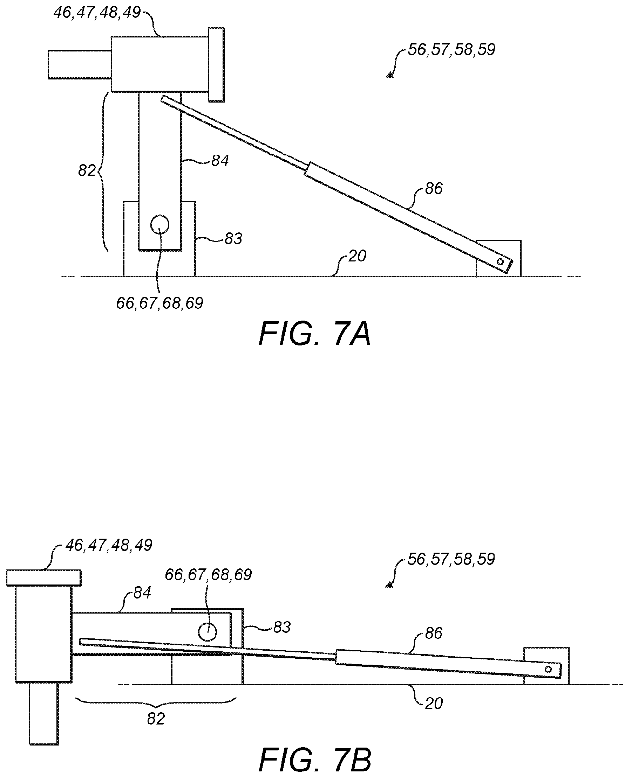

Figures 7A and 7B show a turbomachine 46, 47, 48, 49 attached to the hull 20 of the device 10 shown in figures 5 and 6. The turbomachine 46, 47, 48, 49 is attached to the hull 20 via a pylon 56, 57, 58, 59. More specifically, each pylon 56, 57, 58, 59 comprises a hinged connection 82 and an actuator 86. The hinged connection 82 comprises a base portion 83 connected to the hull 20 and a rotatable portion 84 connected to the turbomachine 46, 47, 48, 49. The rotatable portion 84 is connected to the base portion 83 via a hinge 66, 67, 68, 69. The actuator 86 is connected to the rotatable portion 84 of the hinged connection 82. The actuator 86 is configured to pivot the rotatable portion 84 and turbomachine 46, 47, 48, 49 about the hinge 66, 67, 68, 69. The actuator 86 is a hydraulic arm. The actuator 86 is configured to expand and contract along its longitudinal axis, thus rotating the rotatable portion 84 and turbomachine 46, 47, 48, and 49 about the hinge 66, 67, 68, 69.

In figure 7A, the pylon 56, 57, 58, 59 is in a 'boat' position. The 'boat' position is also shown in figure 5. In this position, each turbomachine 46, 47, 48, 49 is configured to generate a propulsive force substantially parallel to the base 30 of the hull 20. However, the direction of the propulsive force may be varied in order to steer the device across the water. The propulsive force may also comprise a cant angle.

In figure 7B, the pylon 56, 57, 58, 59 is in a 'fly' position. The 'fly' position is also shown in figure 6. In this position, each turbomachine 46, 47, 48, 49 is configured to generate a propulsive force substantially perpendicular to the base 30 of the hull 20. However, the direction of the propulsive force is varied in order to steer the device through the air. The propulsive force may also comprise a cant angle.

The device is operable between the 'fly' position and 'boat' position. For example, the device may be positioned into 'fly' position and manoeuvred, through the air, into a waterway. The device may then be changed into 'boat' position and manoeuvred across the waterway. To retrieve the device, it may be transitioned back into the 'fly' position and manoeuvred, through the air, out of the waterway. The power generated by the device in the 'boat' position may be less than the power generated in the 'fly' position. This saves power.

Various further aspects and embodiments of the present invention will be apparent to those skilled in the art in view of the present disclosure. "and/or" where used herein is to be taken as specific disclosure of each of the two specified features or components with or without the other. For example, "A and/or B" is to be taken as specific disclosure of each of (i) A, (ii) B and (iii) A and B, just as if each is set out individually herein.

Unless the context dictates otherwise, the descriptions and definitions of the features set out above are not limited to any particular aspect or embodiment of the invention and apply equally to all aspects and embodiments, which are described. It will further be appreciated by those skilled in the art that although the invention has been described by way of example with reference to several embodiments. It is not limited to the disclosed embodiments and that alternative embodiments could be constructed without departing from the scope of the invention as defined in the appended claims.

## Claims

1. A remotely controlled boat-drone hybrid (10) for use on water and through the air, the boat-drone hybrid (10) comprising:
a buoyant hull (20) having a substantially planar base (30); and
a propulsion system (40) comprising a plurality of turbomachines (46, 47, 48, 49) configured to propel the boat-drone hybrid (10) in any direction across a surface of a body of water,
wherein the propulsion system is located above the water, in use, and
wherein each turbomachine (46, 47, 48, 49) is attached to a corresponding pylon (56, 57, 58, 59) having a corresponding hinge (66, 67, 68, 69), and
wherein each turbomachine (46, 47, 48, 49) is configured to rotate about and/or around its hinge (66, 67, 68, 69) such that the propulsion system (40) can propel the boat-done hybrid in a substantially vertical direction away from the water and manoeuvre it through the air, in use.

2. The boat-drone hybrid (10) according to claim 1, wherein the base (30) comprises at least two axes of symmetry.

3. The boat-drone hybrid (10) according to claim 1 or claim 2, wherein the base (30) is substantially circular.

4. The boat-drone hybrid (10) according to any preceding claim, wherein the hull (20) is configured to carry a payload.

5. The boat-drone hybrid (10) according to any preceding claim, wherein the hull (20) further comprises continuous track having a camera and wherein the camera is configured to move around the track, in use.

6. The boat-drone hybrid (10) according to any preceding claim, wherein the propulsion system (40) comprises at least three turbomachines (46, 47, 48, 49).

7. The boat-drone hybrid (10) according to any preceding claim, wherein the propulsions system comprises two or more pairs of opposing turbomachines (52, 54).

8. The boat-drone hybrid (10) according to any preceding claim, wherein the magnitude of the propulsive force generated by each turbomachine (46, 47, 48, 49) is varied, in use, in order to steer the boat-drone hybrid (10).

9. The boat-drone hybrid (10) according to any preceding claim, wherein each pylon (56, 57, 58, 59) is sized such that a propulsive force generated by the corresponding turbomachine (46, 47, 48, 49) substantially perpendicular to the plane substantially parallel to the base (30) is located outside of the hull (20) of the boat-drone hybrid (10).

10. The boat-drone hybrid (10) according to any preceding claim, wherein each turbomachine (46, 47, 48, 49) comprises two axes of rotation relative to the base (30).

11. The boat-drone hybrid (10) according to any preceding claim, wherein the propulsion system is configured to propel the device in any direction relative to the plane substantially parallel to the base.

12. The boat-drone hybrid (10) according to any preceding claim, wherein each turbomachine (46, 47, 48, 49) is positioned at a cant angle relative to the base (30) of the hull (20) such that the line of action of the propulsive force generated by each turbomachine (46, 47, 48, 49) is at an angle relative to a plane parallel and/or perpendicular to the base (30) of the hull (20).

13. The boat-drone hybrid (10) according to any preceding claim, further comprising a fuel cell and battery (70) connected in series and configured to provide power to the propulsion system (40).

14. The boat-drone hybrid (10) according to claim 12, wherein the fuel cell is configured to power the propulsion system (40) when less than 20% of the total power output of the boat-drone hybrid (10) is required, and wherein the battery (70) is configured to provide power to the propulsion system (40) when more than 20% of the total power output of the boat-drone hybrid (10) is required.

## Patentansprüche

1. Ferngesteuerter Boot-Drohne-Hybrid (10) zur Verwendung auf Wasser und durch die Luft, wobei der Boot-Drohne-Hybrid (10) Folgendes umfasst:
einen schwimmfähigen Rumpf (20) mit einer im Wesentlichen ebenen Basis (30); und
ein Antriebssystem (40), das eine Vielzahl von Turbomaschinen (46, 47, 48, 49) umfasst, das konfiguriert ist, um den Boot-Drohne-Hybrid (10) in einer beliebigen Richtung über eine Oberfläche eines Gewässers anzutreiben,
wobei sich das Antriebssystem in Verwendung über dem Wasser befindet, und
wobei jede Turbomaschine (46, 47, 48, 49) an einem entsprechenden Mast (56, 57, 58, 59) mit einem entsprechenden Scharnier (66, 67, 68, 69) angebracht ist, und
wobei jede Turbomaschine (46, 47, 48, 49) konfiguriert ist, um sich um und/oder herum um ihr Scharnier (66, 67, 68, 69) zu drehen, sodass das Antriebssystem (40) den Boot-Drohne-Hybrid in Verwendung in einer im Wesentlichen vertikalen Richtung weg von dem Wasser antreiben und ihn durch die Luft manövrieren kann.

2. Boot-Drohne-Hybrid (10) nach Anspruch 1, wobei die Basis (30) zumindest zwei Symmetrieachsen umfasst.

3. Boot-Drohne-Hybrid (10) nach Anspruch 1 oder Anspruch 2, wobei die Basis (30) im Wesentlichen kreisförmig ist.

4. Boot-Drohne-Hybrid (10) nach einem vorhergehenden Anspruch, wobei der Rumpf (20) konfiguriert ist, um eine Nutzlast zu tragen.

5. Boot-Drohne-Hybrid (10) nach einem vorhergehenden Anspruch, wobei der Rumpf (20) ferner kontinuierliche Schiene mit einer Kamera umfasst und wobei die Kamera konfiguriert ist, um sich in Verwendung um die Schiene herum zu bewegen.

6. Boot-Drohne-Hybrid (10) nach einem vorhergehenden Anspruch, wobei das Antriebssystem (40) zumindest drei Turbomaschinen (46, 47, 48, 49) umfasst.

7. Boot-Drohne-Hybrid (10) nach einem vorhergehenden Anspruch, wobei das Antriebssystem zwei oder mehr Paare von gegenüberliegenden Turbomaschinen (52, 54) umfasst.

8. Boot-Drohne-Hybrid (10) nach einem vorhergehenden Anspruch, wobei die Größe der Antriebskraft, die durch jede Turbomaschine (46, 47, 48, 49) erzeugt wird, in Verwendung variiert wird, um den Boot-Drohne-Hybrid (10) zu lenken.

9. Boot-Drohne-Hybrid (10) nach einem vorhergehenden Anspruch, wobei jeder Mast (56, 57, 58, 59) bemessen ist, sodass sich eine Antriebskraft, die durch die entsprechende Turbomaschine (46, 47, 48, 49) im Wesentlichen senkrecht zu der Ebene im Wesentlichen parallel zu der Basis (30) erzeugt wird, außerhalb des Rumpfes (20) des Boot-Drohne-Hybrids (10) befindet.

10. Boot-Drohne-Hybrid (10) nach einem vorhergehenden Anspruch, wobei jede Turbomaschine (46, 47, 48, 49) zwei Drehachsen relativ zu der Basis (30) umfasst.

11. Boot-Drohne-Hybrid (10) nach einem vorhergehenden Anspruch, wobei das Antriebssystem konfiguriert ist, um die Vorrichtung in einer beliebigen Richtung relativ zu der Ebene im Wesentlichen parallel zu der Basis anzutreiben.

12. Boot-Drohne-Hybrid (10) nach einem vorhergehenden Anspruch, wobei jede Turbomaschine (46, 47, 48, 49) in einem Schrägwinkel relativ zu der Basis (30) des Rumpfes (20) positioniert ist, sodass die Wirkungslinie der Antriebskraft, die durch jede Turbomaschine (46, 47, 48, 49) erzeugt wird, in einem Winkel relativ zu einer Ebene parallel und/oder senkrecht zu der Basis (30) des Rumpfes (20) ist.

13. Boot-Drohne-Hybrid (10) nach einem vorhergehenden Anspruch, ferner umfassend eine Brennstoffzelle und eine Batterie (70), die in Reihe verbunden und konfiguriert sind, um dem Antriebssystem (40) Leistung bereitzustellen.

14. Boot-Drohne-Hybrid (10) nach Anspruch 12, wobei die Brennstoffzelle konfiguriert ist, um das Antriebssystem (40) mit Leistung zu versorgen, wenn weniger als 20 % der Gesamtleistungsabgabe des Boot-Drohne-Hybrids (10) erforderlich sind, und wobei die Batterie (70) konfiguriert ist, um dem Antriebssystem (40) Leistung bereitzustellen, wenn mehr als 20 % der Gesamtleistungsabgabe des Boot-Drohne-Hybrids (10) erforderlich sind.

## Revendications

1. Hybride bateau-drone commandé à distance (10) destiné à être utilisé sur l'eau et dans les airs, l'hybride bateau-drone (10) comprenant :
une coque flottante (20) possédant une base sensiblement plane (30) ; et
un système de propulsion (40) comprenant une pluralité de turbomachines (46, 47, 48, 49) conçues pour propulser l'hybride bateau-drone (10) dans n'importe quelle direction sur une surface d'une masse d'eau,
ledit système de propulsion étant situé au-dessus de l'eau, lors de l'utilisation, et
chaque turbomachine (46, 47, 48, 49) étant fixée à un mât correspondant (56, 57, 58, 59) comportant une articulation correspondante (66, 67, 68, 69), et
chaque turbomachine (46, 47, 48, 49) étant conçue pour tourner sur et/ou autour de son articulation (66, 67, 68, 69) de sorte que le système de propulsion (40) puisse propulser l'hybride bateau-drone dans une direction sensiblement verticale loin de l'eau et le manoeuvrer dans les airs, lors de son utilisation.

2. Hybride bateau-drone (10) selon la revendication 1, ladite base (30) comprenant au moins deux axes de symétrie.

3. Hybride bateau-drone (10) selon la revendication 1 ou la revendication 2, ladite base (30) étant sensiblement circulaire.

4. Hybride bateau-drone (10) selon une quelconque revendication précédente, ladite coque (20) étant conçue pour porter une charge utile.

5. Hybride bateau-drone (10) selon une quelconque revendication précédente, ladite coque (20) comprenant en outre une piste continue comportant une caméra et ladite caméra étant conçue pour se déplacer autour de la piste, lors de l'utilisation.

6. Hybride bateau-drone (10) selon une quelconque revendication précédente, ledit système de propulsion (40) comprenant au moins trois turbomachines (46, 47, 48, 49).

7. Hybride bateau-drone (10) selon une quelconque revendication précédente, ledit système de propulsion comprenant deux, ou plus, paires de turbomachines opposées (52, 54).

8. Hybride bateau-drone (10) selon une quelconque revendication précédente, ladite amplitude de la force de propulsion générée par chaque turbomachine (46, 47, 48, 49) étant modifiée, lors de l'utilisation, afin de diriger l'hybride bateau-drone (10).

9. Hybride bateau-drone (10) selon une quelconque revendication précédente, chaque mât (56, 57, 58, 59) étant dimensionné de sorte qu'une force de propulsion générée par la turbomachine correspondante (46, 47, 48, 49) sensiblement perpendiculaire au plan sensiblement parallèle à la base (30) soit située à l'extérieur de la coque (20) de l'hybride bateau-drone (10).

10. Hybride bateau-drone (10) selon une quelconque revendication précédente, chaque turbomachine (46, 47, 48, 49) comprenant deux axes de rotation par rapport à la base (30).

11. Hybride bateau-drone (10) selon une quelconque revendication précédente, ledit système de propulsion étant conçu pour propulser le dispositif dans une quelconque direction par rapport au plan sensiblement parallèle à la base.

12. Hybride bateau-drone (10) selon une quelconque revendication précédente, chaque turbomachine (46, 47, 48, 49) étant positionnée à un angle de dévers par rapport à la base (30) de la coque (20) de sorte que la ligne d'action de la force de propulsion générée par chaque turbomachine (46, 47, 48, 49) soit à un angle de dévers par rapport à un plan parallèle et/ou perpendiculaire à la base (30) de la coque (20).

13. Hybride bateau-drone (10) selon une quelconque revendication précédente, comprenant en outre une pile à combustible et une batterie (70) connectées en série et conçues pour fournir de l'énergie au système de propulsion (40).

14. Hybride bateau-drone (10) selon la revendication 12, ladite pile à combustible étant conçue pour alimenter le système de propulsion (40) lorsque moins de 20 % de la puissance totale de sortie de l'hybride bateau-drone (10) est requise, et ladite batterie (70) étant conçue pour fournir de l'énergie au système de propulsion (40) lorsque plus de 20 % de la puissance totale de sortie de l'hybride bateau-drone (10) est requise.
